# EUROPÄISCHE PATENTSCHRIFT

(11) **EP 3 489 530 B1**
(45) Veröffentlichungstag und Bekanntmachung des Hinweises auf die Patenterteilung: **07.10.2026**
(21) Anmeldenummer: 17204151.9
(22) Anmeldetag: 28.11.2017
(51) Int. Cl.: F15B 21/08, G05B 19/46

(54) **HYDRAULIKSYSTEM MIT SERVOANTRIEB UND EINEM HYDRAULISCHEN VERBRAUCHER UND REGELUNG FÜR DAS HYDRAULIKSYSTEM**
HYDRAULIC SYSTEM WITH SERVO DRIVE AND A HYDRAULIC CONSUMER AND CONTROL FOR THE HYDRAULIC SYSTEM
SYSTÈME HYDRAULIQUE À SERVOCOMMANDE ET POURVU DE CONSOMMATEUR HYDRAULIQUE ET DISPOSITIF DE COMMANDE POUR LE SYSTÈME HYDRAULIQUE

(43) Veröffentlichungstag der Anmeldung: 29.05.2019
(73) Patentinhaber: ABB Schweiz AG, 5400 Baden (CH)
(72) Erfinder: Bohatsch, Elmar, 5280 Braunau am Inn (AT); Grünbacher, Engelbert, 4840 Vöcklabruck (AT); Kickinger, Robert, 5142 Eggelsberg (AT)
(74) Vertreter: Weiss Patentanwalts GmbH

(56) Entgegenhaltungen:
- WO-A2-2012/171603
- DE-A1- 102013 005 416
- JP-A- 2015 070 668

## Beschreibung

Die gegenständliche Erfindung betrifft ein Verfahren zum Regeln des Ist-Systemdrucks eines hydraulischen Verbrauchers eines Hydrauliksystems, wobei einer Regelungseinheit ein Soll-Systemdruck als Führungsgröße und der Ist-Systemdruck als Regelgröße zugeführt werden, die Regelungseinheit einem Elektromotor eines Servoantriebs ein elektrisches Motormoment, welches auf eine Pumpe des Servoantriebs wirkt, vorgibt, die Pumpe einen Volumenstrom am hydraulischen Verbraucher erzeugt, wodurch sich ein mechanisches Lastmoment am Elektromotor einstellt und im hydraulischen Verbraucher über den Volumenstrom der Ist-Systemdruck erzeugt wird, wobei einer Begrenzungseinheit eine dynamische Systemgröße des Hydrauliksystems übermittelt wird, und die Begrenzungseinheit das von der Regelungseinheit an den Elektromotor übermittelte Motormoment in Abhängigkeit vom Wert der Systemgröße begrenzt. Weiters betrifft die gegenständliche Erfindung ein Hydrauliksystem umfassend einen aus einem Elektromotor und einer Pumpe zusammengesetzten Servoantrieb, eine Regelungseinheit und einen hydraulischen Verbraucher, wobei der Regelungseinheit ein Soll-Systemdruck als Führungsgröße vorgegeben und ein Ist-Systemdruck des hydraulischen Verbraucher als Regelgröße zugeführt wird und die Regelungseinheit dem Elektromotor ein elektrisches Drehmoment als Führungsgröße vorgibt, der Elektromotor das Motormoment an die Pumpe überträgt, womit die Pumpe am hydraulischen Verbraucher einen Volumenstrom erzeugt über welchen der Ist-Systemdruck erzeugt wird, und wobei sich am Elektromotor ein mechanisches Lastmoment einstellt, wobei eine Begrenzungseinheit mit der Regelungseinheit verbunden ist, wobei die Begrenzungseinheit unter Verwendung einer Systemgröße des Hydrauliksystems das von der Regelungseinheit an den Elektromotor übermittelte Motormoment begrenzt.

Hydrauliksysteme bestehen aus hydraulischen Erzeugern und hydraulischen Verbrauchern. Als hydraulischer Erzeuger dient in der Regel ein Servoantrieb, als hydraulische Verbraucher können zum Beispiel Hydraulikzylinder, Hydromotoren, hydraulische Kapazitäten, etc. dienen. Als Servoantrieb wird in diesem Zusammenhang üblicherweise eine Kombination aus einem Elektromotor und einer Pumpe verstanden, wobei der Elektromotor von einem Umrichter mit einem Motorstrom versorgt wird. Einer Regelungseinheit wird ein zu regelnder Soll-Systemdruck vorgegeben, der einzuregeln ist, wofür auch ein aktueller Ist-Systemdruck des hydraulischen Verbrauchers, welcher an den Soll-Systemdruck angeglichen werden soll, erfasst wird. Die Regelungseinheit übermittelt hierzu dem Elektromotor ein hochdynamisches elektrisches Motormoment welches an die die Pumpe übertragen wird. Diese Übertragung erfolgt in der Regel von einer Motorwelle des Elektromotors, vorzugsweise über eine Kupplung, auf eine Pumpenwelle der Pumpe. Die Pumpe fördert einen vom zugeführten mechanischen Motormoment abhängigen hydraulischen Volumenstrom eines geförderten Mediums des hydraulischen Verbrauchers, wobei sich am Elektromotor ein mechanisches Lastmoment einstellt. Dieser veränderliche Volumenstrom des Mediums bewirkt eine Änderung des hydraulischen Ist-Systemdrucks im hydraulischen Verbraucher des Hydrauliksystems, welcher an die Regelungseinheit als Regelgröße rückgeführt wird. Üblicherweise weist eine Regelung eines Hydrauliksystems eine PID-Struktur oder eine PID-ähnliche Struktur mit zusätzlichen Filtern auf. Die einzelnen Komponenten des Elektromotors und der Pumpe werden jeweils mechanisch auf das maximal zulässige mechanische Lastmoment ausgelegt. So ist es natürlich wünschenswert, dass das von der Regelung geforderte mechanische Lastmoment ein zulässiges maximales Lastmoment nicht überschreitet. In gewissen Anwendungen werden jedoch sehr hohe Beschleunigungen der Motordrehzahl für einen raschen Aufbau oder Abbau des Systemdrucks benötigt. So wird beispielsweise zum Abbremsen der Pumpe bis zum Stillstand ein negatives elektrisches Motormoment eingestellt. Wird jedoch zu lange ein negatives elektrisches Motormoment an den Elektromotor angelegt, so kann es dazu kommen, dass das mechanische Lastmoment ebenso negativ wird, was bedeutet, dass der Elektromotor rückwärts dreht. Dies führt üblicherweise zu einer Zerstörung der Pumpe. Um das zu vermeiden wird derzeit der Servoantrieb sowohl im zulässigen maximalen und minimalen (elektrischen) Motormoment, als auch in der zulässigen Änderungsrate des Motormoments beschränkt, um zu vermeiden, dass das Lastmoment die zulässigen Grenzwerte überschreitet. Dabei werden üblicherweise feste Grenzwerte für das maximale und minimale (elektrische) Motormoment vorgegeben oder auch der Motorstrom innerhalb fixer Grenzen gehalten, womit jedoch die Leistungsfähigkeit des Servoantrieb nicht voll ausgenutzt werden kann, wobei die Pumpe innerhalb der spezifizierten Grenzen für auftretende Momente und in der vorgegebenen Drehrichtung betrieben wird.

Die WO 2012/171603 A2 offenbart eine Begrenzung eines Motordrehmoments durch ein Vorgabedrehmoment. Das Vorgabedrehmoment wird wiederum unter Verwendung eines Ist-Drucks, welcher eine Systemgröße darstellt, ermittelt. Die JP 2015 070668 A zeigt eine Limitierung eines Motormoments auf Basis eines aktuellen Lastdrucks, wobei ein Zylinder als hydraulischer Verbraucher dient.

Es ist eine Aufgabe der gegenständlichen Erfindung den möglichen Bereich des mechanischen Lastmoments eines Servoantriebs in Kombination mit einer Pumpe besser auszunutzen und zusätzlich zu schützen.

Diese Aufgabe wird erfindungsgemäß durch ein Verfahren und eine Vorrichtung gelöst, wobei eine Berechnungseinheit unter Verwendung der Systemgröße ein abgeschätztes Lastmoment berechnet und der Begrenzungseinheit übermittelt, welche das Motormoment in Abhängigkeit vom Wert des abgeschätzten Lastmoments begrenzt. Die erfindungsgemäße Lösung hat gegenüber vorgegebenen festen Grenzwerten des Motormoments den Vorteil, dass das Motormoment hochdynamisch abhängig vom aktuellen Wert einer variablen Systemgröße, z.B. Ist-Systemdruck, Motordrehzahl, etc., begrenzt werden kann. So kann individuell auf den aktuellen Betriebszustand des Hydrauliksystems reagiert werden. Dabei können (elektrische) Motormomente erzeugt werden, die über übliche, im Stand der Technik vorgegebene, maximale und minimale Grenzwerte des Motormoments hinausreichen, jedoch im jeweiligen Betriebszustand des Hydrauliksystems kein unzulässiges Lastmoment verursachen (z.B. ein Lastmoment außerhalb der erlaubten maximalen oder minimalen Grenzen, oder ein Lastmoment über einem oberen Grenzwert). So kann ein elektrisches Motormoment beispielsweise auch negativ sein um eine mechanisch gekoppelte Last, z.B. in Form einer Pumpe schnell auf eine Drehzahl von Null abzubremsen, wobei ein dabei auftretendes mechanisches Lastmoment schnell reduziert wird. Dabei muss das Motormoment natürlich dennoch rechtzeitig begrenzt werden, bevor die Drehrichtung das Vorzeichen wechselt (d.h. umkehrt), was zu einer Zerstörung oder zumindest zu einer Überbeanspruchung der Pumpe führen würde. Die Begrenzungseinheit kann dabei zwischen Regelungseinheit und Servoantrieb, bzw. dem Elektromotor des Servoantriebs geschaltet werden, um das Motormoment zu begrenzen oder natürlich auch integraler Bestandteil der Regelungseinheit oder (einer Motorsteuerung) des Elektromotors sein.

Erfindungsgemäß berechnet eine Berechnungseinheit unter Verwendung der Systemgröße ein abgeschätztes Lastmoment und übermittelt dieses der Begrenzungseinheit, welche wiederum das Motormoment in Abhängigkeit vom Wert des abgeschätzten Lastmoments begrenzt. Es wird also in der Berechnungseinheit das abgeschätzte Lastmoment aus der aktuellen Systemgröße des Hydrauliksystems abgeleitet. Das so ermittelte abgeschätzte Lastmoment wird von der Begrenzungseinheit herangezogen um das von der Regelungseinheit vorgegebene Motormoment, sofern im aktuellen Betriebszustand des Hydrauliksystems notwendig, zu begrenzen. Es wird somit ggf. nicht das volle von der Regelungseinheit vorgegebene Motormoment an den Servoantrieb, bzw. die Motorsteuerung des Elektromotors weitergegeben, sondern im Bedarfsfall von der Begrenzungseinheit begrenzt. Sobald dieser Bedarfsfall nicht mehr auftritt, wird das Motormoment vorteilhafterweise nicht mehr begrenzt. Da das abgeschätzte Lastmoment das tatsächlich auftretende Lastmoment annähert, kann dieses somit zu jedem Zykluszeitpunkt der Regelung indirekt überwacht und begrenzt werden.

Vorteilhafterweise wird einer Vergleichseinheit eine minimale Lastmomentschwelle, vorzugsweise Null und/oder eine maximale Lastmomentschwelle vorgegeben und der Vergleichseinheit von der Berechnungseinheit das abgeschätzte Lastmoment übermittelt. Die Vergleichseinheit prüft, ob das abgeschätzte Lastmoment die minimale Lastmomentschwelle unterschreitet und/oder die maximale Lastmomentschwelle überschreitet und übermittelt bei drohender Unterschreitung/Überschreitung ein Signal an die Begrenzungseinheit. Die Begrenzungseinheit begrenzt bei Empfang des Signals das Motormoment, d.h. erlaubt in diesem Moment keine weitere Steigerung bzw. Minderung des Motormoments. Damit wird verhindert, dass das abgeschätzte Lastmoment tatsächlich die minimale Lastmomentschwelle unterschreitet und/oder die maximale Lastmomentschwelle überschreitet. Droht in weiterer Folge keine Überschreitung bzw. Unterschreitung der maximalen bzw. minimalen Lastmomentschwelle, so wird das Motormoment vorteilhafterweise nicht mehr begrenzt, was der Begrenzungseinheit durch Ausbleiben des von der Vergleichseinheit gesendeten Signals oder auf andere Weise, beispielsweise ein Freigabesignal des von der Regelungseinheit gelieferten Motormoments, signalisiert werden kann.

So kann einerseits mittels der maximalen Lastmomentschwelle sichergestellt werden, dass das abgeschätzte Lastmoment und damit bei entsprechend gewählten Parametern auch das tatsächlich auftretende Lastmoment keinen unzulässig hohen Wert (größer dem maximalen Lastmoment) erreicht. Damit können nicht nur Elektromotor und Pumpe vor einem zu hohen Lastmoment geschützt werden, sondern auch weitere vorhandene Komponenten, wie eine Motorwelle, Pumpenwelle, Kupplung usw.

Andererseits kann bei vorzugsweiser Vorgabe einer minimalen Lastmomentschwelle von Null sichergestellt werden, dass das auftretende abgeschätzte Lastmoment und damit auch das auftretende Lastmoment nicht negativ wird. Damit kann ein Rückwärtsdrehen des Elektromotors und damit der Pumpe verhindert werden.

Selbstverständlich kann sowohl eine maximale Lastmomentschwelle, als auch eine minimale Lastmomentschwelle vorgegeben sein, womit ein Bereich des zulässigen abgeschätzten Lastmoments festgelegt wird. Die Begrenzungseinheit berücksichtigt hier somit die minimalen und/oder maximalen Lastmomentschwellen um das elektrische Motormoments zu begrenzen. Damit wird wiederum das tatsächlich auftretende mechanische Lastmoment begrenzt.

Das abgeschätzte Lastmoment wird erfindungsgemäß unter Verwendung eines Modells des Hydrauliksystems berechnet, wobei die Motordrehzahl als Systemgröße dient. Das Modell kann durch die Formel ${M}_{last} = {M}_{motor} - \frac{{k}_{0}}{2 π} {ω}_{motor} - {J}_{motor} ⋅ {\dot{ω}}_{motor}$ mit den Parametern elektrisches Motormoment, Motorträgheitsmoment und Drehmomentkonstante beschrieben werden. Der Punkt über der Größe bezeichnet dabei bekanntermaßen die Newton'sche Notation der Ableitung nach der Zeit. Die Größen der genannten Formel liegen als Messgrößen oder als bekannte Parameter vor, oder können daraus abgeleitet werden. Die Motordrehzahl als Systemgröße ist üblicherweise bekannt oder kann unter Verwendung eines einfachen Drehzahlsensors ermittelt werden.

Die Begrenzungseinheit kann die Systemgröße von der Regelungseinheit und/oder dem Servoantrieb beziehen. Natürlich kann die Systemgröße auch von mehreren Komponenten des Hydrauliksystems 1 übertragen werden, z.B. im Sinne einer sicherheitsrelevanten Redundanz.

Aus dem Übertragungsverhalten der Antriebsstrecke kann eine korrigierte Drehmomentkonstante ermittelt und im Modell verwendet werden.

Die korrigierte Drehmomentkonstante kann in einem Arbeitspunkt aus der Beziehung ${k}_{ν} = \frac{\left(1-{η}_{pump}\right) ⋅ {V}_{th} ⋅ {p}_{ist}}{10 ⋅ {η}_{pump} ⋅ {ω}_{motor}}$ berechnet werden, mit dem Fördervolumen der Pumpe Vₜₕ, dem Ist-Systemdruck pᵢₛₜ, dem Pumpenwirkungsgrad ηₚᵤₘₚ und der Motordrehzahl ωₘₒₜₒᵣ = 2πn. Damit kann das berechnete Motormoment genau ermittelt werden, was vorteilhaft sein kann, falls das vorgegebene Motormoment eine signifikante Abweichung vom der tatsächlichen angegebenen Motormoment aufweist, was wiederum bedeuten würde, dass auch das berechnete mechanische Lastmomentsignifikant vom tatsächlichen mechanischen Lastmoment abweicht.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 ein Hydrauliksystem mit einer erfindungsgemäßen Begrenzungseinheit ,
Fig.2 eine Begrenzungseinheit mit Vergleichseinheit und Berechnungseinheit,
Fig.3 der Übertragungsfunktion von elektrischem Motormoment auf die Motordrehzahl ,
Fig.4 die Verläufe von vorgegebener Motorkonstante, berechneter Motorkonstante und tatsächlicher Motorkonstante,
Fig.5 die Verläufe von abgeschätzten Lastmomenten und des tatsächlichen mechanischen Lastmoments,
Fig.6 die Verläufe eines Lastmomentes, eines abgeschätzten Lastmoments und eines Motormoments.

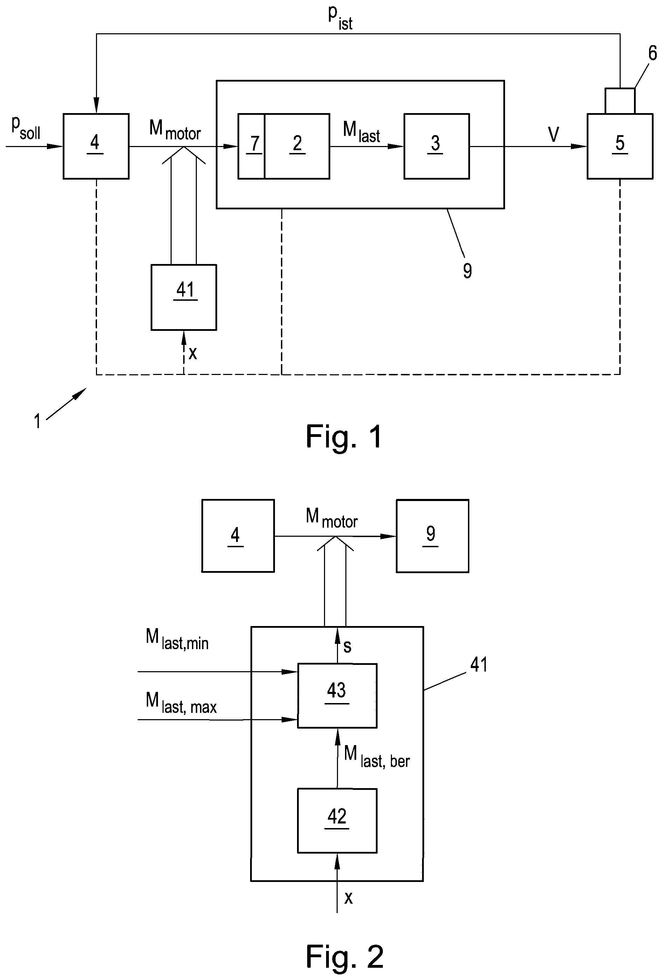

In Fig. 1 ist ein schematisches Hydrauliksystem 1 dargestellt. Ein hydraulischer Verbraucher 5 weist einen Ist-Systemdruck pᵢₛₜ auf, welcher sich aufgrund eines zugeführten Volumenstroms V eines Mediums einstellt. Der Volumenstrom V wird von einer Pumpe 3 erzeugt, welche wiederum von einem Elektromotor 2 angetrieben wird, was üblicherweise über eine Kupplung von einer Motorwelle des Elektromotors 2 auf eine Pumpenwelle der Pumpe 3 erfolgt. Der Elektromotor 2 und die Pumpe 3 bilden zusammen einen Servoantrieb 9, welcher somit das geförderte Medium, z.B. Hydrauliköl, zum hydraulischen Verbrauchers mit dem Volumenstrom V fördert. Hierzu wird am Elektromotor 2 über einen momentbildenden Strom ein elektrisches Moment Mₘₒₜₒᵣ erzeugt. Das mechanische Lastmoment Mₗₐₛₜ stellt also das Moment dar, welches sich am Eingang der Pumpe 3, z.B. an der Pumpenwelle einstellt, wenn jener Volumenstrom V im hydraulischen Verbraucher 5 zur Verfügung gestellt wird, welcher den gewünschten Ist-Systemdruck pᵢₛₜ verursacht.

Einer Regelungseinheit 4, z.B. einer Speicherprogrammierbaren Steuerung (SPS), wird ein Soll-Systemdruck pₛₒₗₗ als Führungsgröße vorgegeben, wobei diese Vorgabe beispielsweise durch einen Benutzer oder ein Steuerprogramm erfolgen kann. Zusätzlich erhält die Regelungseinheit 4 den aktuellen Ist-Systemdruck pᵢₛₜ als rückgekoppelte Regelgröße vom hydraulischen Verbraucher 5. Dazu kann der Ist-Systemdruck pᵢₛₜ beispielsweise mit einem Drucksensor 6 gemessen werden. Die Regelungseinheit 4 gibt so im Zuge der Regelung der Motorsteuerung 7 des Elektromotors 2, üblicherweise ein Umrichter, das elektrische Motormoment Mₘₒₜₒᵣ (oder äquivalent auch einen Motorstrom) vor, wodurch sich am Elektromotor 2 das von der Pumpe 3, bzw. dem hydraulischen Verbraucher 5, abhängige mechanische Lastmoment Mₗₐₛₜ einstellt.

Bekanntermaßen kann das tatsächliche elektrische Motormoment Mₘₒₜₒᵣ über den durch die Windungen des Elektromotors 2 fließenden Motorstrom abgeschätzt werden. Das mechanische Lastmoment Mₗₐₛₜ unterscheidet sich aber vom elektrischen Motormoment Mₘₒₜₒᵣ z.B. durch eine beschleunigte Motormassenträgheit des Motors plus Reibverluste, und ist damit in der Regel kleiner als das elektrische Motormoment Mₘₒₜₒᵣ. Das tatsächlich zwischen Elektromotor 2 und Pumpe 3 auftretende mechanische Lastmoment Mₗₐₛₜ wird in einem Servoantrieb 9 üblicherweise nicht gemessen und kann daher auch nicht direkt begrenzt werden, weshalb im Stand der Technik in der Regel an der Regelungseinheit 4 fixe Grenzwerte für das elektrische Motormoment Mₘₒₜₒᵣ vorgesehen sind. Erfindungsgemäß ist jedoch eine Begrenzungseinheit 41, vorgesehen, die eine verfügbare, beispielsweise gemessene, dynamische Systemgröße x des Hydrauliksystems 1 nutzt, um darauf basierend das von der Regelungseinheit 4 an den Servoantrieb 9 abgegebene Motormoment Mₘₒₜₒᵣ zu begrenzen, wie in Fig. 1 mit dem Pfeil angedeutet. Da die dynamische Systemgröße x vom Zustand des Hydrauliksystems 1 abhängt und somit direkt oder indirekt vom Motormoment Mₘₒₜₒᵣ und damit auch vom auftretenden Lastmoment Mₗₐₛₜ abhängig ist, ist es somit möglich das Motormoment Mₘₒₜₒᵣ dynamisch zu begrenzen. Diese Begrenzung des Motormoments Mₘₒₜₒᵣ ist somit nicht wie im Stand der Technik starr vorgegeben, sondern kann von Zeitpunkt zu Zeitpunkt abhängig vom jeweiligen Betriebszustand des Hydrauliksystems 1 variieren. Damit können auch Motormomente Mₘₒₜₒᵣ an den Elektromotor 2 des Servoantriebs 9 angelegt werden, die bei starren vorgegebenen Grenzen des Motormoments Mₘₒₜₒᵣ nicht erlaubt wären. Für diese erhöhten oder gar negativen Motomomente Mₘₒₜₒᵣ muss jedoch aus der Systemgröße x ergehen, dass dadurch kein unerlaubter Zustand des Hydrauliksystems 1 eintreten kann, wie beispielsweise ein zu hohes oder negatives Lastmoment Mₗₐₛₜ.

Wie in Fig. 1 durch die strichlierten Pfeile angedeutet, kann die Begrenzungseinheit 41 die Systemgröße x von Komponenten des Hydrauliksystems 1 beziehen, beispielsweise der Regelungseinheit 4, dem Servoantrieb 9. Auch ein redundanter Aufbau ist vorstellbar - sofern die Systemgröße x dieser Komponente vorliegt oder von dieser ableitbar ist.

In Fig. 2 ist eine erfindungsgemäße Ausführungsform dargestellt. Es wird in einer Berechnungseinheit 42 über die Systemgröße x ein geschätztes Lastmoment M_{last,ber} ermittelt, das das tatsächliche mechanische Lastmoment Mₗₐₛₜ annähert. Das berechnete mechanische Lastmoment M_{last,ber} stellt eine hinreichende Abschätzung des aktuell auftretenden tatsächlichen mechanischen Lastmoments Mₗₐₛₜ dar, womit durch Begrenzung des Motormoments Mₘₒₜₒᵣ auch das dynamische Lastmoment Mₗₐₛₜ begrenzt werden kann. Die Berechnungseinheit 42 dient somit als eine Art Wellenmomentbeobachter.

Als Systemgröße x dient die Motordrehzahl ω_{motor,} natürlich können zum Schätzen des mechanischen Lastmoments M_{last,ber} in der Begrenzungseinheit 41 auch zusätzliche Systemgrößen x des Hydrauliksystems 1 verwendet werden.

Auch ist in Fig. 2 vorteilhafterweise eine Vergleichseinheit 43 vorgesehen, die mit der Begrenzungseinheit 41 und der Berechnungseinheit 42 verbunden ist und vorteilhafterweise integraler Bestandteil der Begrenzungseinheit 41 ist. Der Vergleichseinheit 43 ist eine maximale Lastmomentschwelle M_{last_max} und/oder eine minimale Lastmomentschwelle vorgegeben. Die Vergleichseinheit 42 prüft, ob das abgeschätzte Lastmoment Mₗₐₛₜ die maximale Lastmomentschwelle M_{last_max} und/oder eine minimale Lastmomentschwelle überschreitet oder zu überschreiten droht und gibt im Falle einer drohenden Überschreitung ein Signal s an die Begrenzungseinheit 41 ab. Die Begrenzungseinheit 41 begrenzt das Motormoment Mₘₒₜₒᵣ dann bei Empfang des Signals s. Das bedeutet, dass in diesem Fall selbst wenn die Regelungseinheit 4 ein höheres oder geringeres Motormoment Mₘₒₜₒᵣ vorgibt, die Begrenzungseinheit 41 diese Werte des Motormoments Mₘₒₜₒᵣ nicht an den Servoantrieb 9 weitergibt, beispielsweise um ein unzulässiges Lastmoment Mₗₐₛₜ zu verhindern. Wie in Fig.2 dargestellt können Vergleichseinheit 43 und Berechnungseinheit 42 integraler Bestandteil der Begrenzungseinheit 41 sein, oder auch eigenständige Komponenten darstellen. Auch die Begrenzungseinheit 41 kann integraler Bestandteil der Regelungseinheit 4 oder der Motorsteuerung 7 des Elektromotors 2 sein.

Zur Implementierung des Wellenmomentbeobachters in der Begrenzungseinheit 41 kann der Servoantrieb 9 als Regelstrecke mit folgendem Modell modelliert werden: ${\dot{ω}}_{motor} = - \frac{k}{2 π ⋅ {J}_{ges}} {ω}_{motor} + \frac{1}{{J}_{ges}} {M}_{motor} - \frac{1}{{J}_{ges}} {M}_{last}$

Dabei bezeichnet ωₘₒₜₒᵣ die Motordrehzahl, k die Drehmomentkonstante, J_{ges} das bekannte Massenträgheitsmoment, Mₘₒₜₒᵣ das elektrische Motormoment und Mₗₐₛₜ das mechanische Lastmoment. Aus diesem Modell kann durch Umformung ein geschätztes mechanisches Lastmoment M_{last,ber} als Näherung des mechanische Lastmoments Mₗₐₛₜ an der Motorwelle des Elektromotors 2, bzw. an der Pumpenwelle der Pumpe 3, ermittelt werden: ${M}_{last} = {M}_{motor} - \frac{k}{2 π} {ω}_{motor} - {J}_{ges} ⋅ {\dot{ω}}_{motor}$

Das mechanische Lastmoment ergibt sich aus dem Motormoment reduziert um einen Faktor, der durch eine viskose Reibung der Pumpe und eine Beschleunigung der Massenträgheit verursacht wird.

Das elektrische Motormoment Mₘₒₜₒᵣ ist der Regelungseinheit 4 als berechnete Stellgröße natürlich bekannt, ebenso die Motordrehzahl ωₘₒₜₒᵣ des Servoantriebs 9, die üblicherweise vom Servoantrieb 9 geliefert wird und hier als Systemgröße x dient. Das Massenträgheitsmoment J_{ges} des Servoantriebs 9 umfasst das Motorträgheitsmoment Jₘₒₜₒᵣ, das Kupplungsträgheitsmoment J_{kupplung} (falls vorhanden) und das Wellenträgheitsmoment J_{welle}, die bekannt sind oder aus Datenblättern der jeweiligen Komponenten entnommen werden können. Dabei stellt das Motorträgheitsmoment Jₘₒₜₒᵣ den dominanten Anteil am Massenträgheitsmoment J_{ges} dar, womit das Massenträgheitsmoment J_{ges} auch durch das das Motorträgheitsmoment Jₘₒₜₒᵣ des Elektromotors 2 angenähert werden.

In der Praxis hat es sich auch herausgestellt, dass die vom Hersteller angegebene Drehmomentkonstante k₀ über dem Arbeitsbereich des Elektromotors 2 von der tatsächlichen Drehmomentkonstanten k abweicht. Das führt auch zu einer größeren Ungenauigkeit bei der Berechnung des berechneten Lastmoments M_{last,ber}. Um diese Ungenauigkeit zu reduzieren, kann vorgesehen sein, eine korrigierte Drehmomentkonstante kᵥ anstelle der vorgegebenen Drehmomentkonstanten k zu verwenden. Dazu kann wie folgt vorgegangen werden.

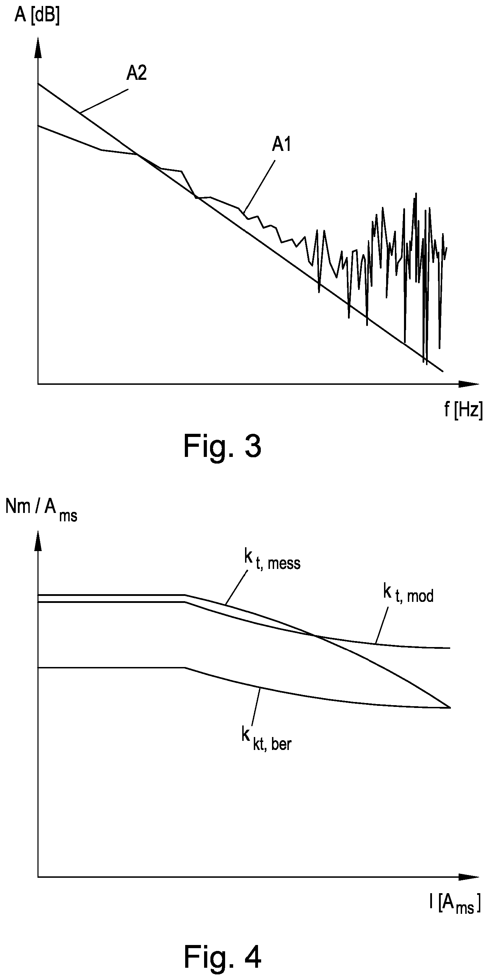

Um das Übertragungsverhalten der Antriebsstrecke, d.h. vom elektrischen Motormoment Mₘₒₜₒᵣ auf die Motordrehzahl ωₘₒₜₒᵣ zu bestimmen, kann der Antriebsstrecke ein Anregungssignal aufgeschaltet werden und die Systemantwort (Motordrehzahl) gemessen werden und daraus in bekannte Weise ein Frequenzgang (als Fourier-Transformierte der Impulsantwort) ermittelt werden. Dabei wurde bei Servopumpen festgestellt, dass der Amplitudengang A1 des Frequenzganges in etwa dem bekannten Amplitudengang A2 einer einfachen Trägheitsmasse mit viskoser Reibung entspricht, wie in Fig. 3 dargestellt. Diese Erkenntnis lässt den Schluss zu, dass das Übertragungsverhalten der Antriebsstrecke durch eine einfache Trägheitsmasse mit viskoser Reibung beschrieben werden kann. Mit dieser Kenntnis kann eine korrigierte Drehmomentkonstante kᵥ berechnet werden, um die tatsächliche Drehmomentkonstante k besser anzunähern, als es durch die vorgegebene Drehmomentkonstante k₀ der Fall wäre.

Um die korrigierte Drehmomentkonstante kᵥ aufgrund dieser Erkenntnis zu ermitteln, kann erst die Wellenleistung P_{welle} an der Pumpenwelle der Pumpe 3 über das Produkt aus Drehmoment M, dem Faktor 2π und der Drehzahl n in 1/Minuten dividiert durch 60 dargestellt werden: ${P}_{welle} = \frac{{M}_{last} ⋅ 2 π ⋅ n}{60}$. Die Leistung Pₚᵤₘₚ der Pumpe 3 selbst berechnet sich hingegen über das Produkt Druck p, Pumpenvolumen pro Minute Q dividiert durch 600 multipliziert mit dem Pumpenwirkungsgrad ${η}_{pump} : {P}_{pump} \frac{{p}_{ist} ⋅ Q}{600 ⋅ {η}_{pump}}$. Werden die Wellenleistung P_{welle} und Pumpenleistung Pₚᵤₘₚ aufgrund der Energieerhaltung gleichgesetzt, so ergibt sich die Gleichung $\frac{{M}_{last} ⋅ 2 π ⋅ n}{60} = \frac{{p}_{ist} ⋅ Q}{600 ⋅ {η}_{pump}}$, welche nach dem mechanischem Lastmoment Mₗₐₛₜ aufgelöst werden kann. So ergibt sich das mechanische Lastmoment Mₗₐₛₜ in einem Arbeitspunkt aus dem Produkt des konstanten theoretischen Fördervolumens der Pumpe Vₜₕ = Q/n, z.B. Vₜₕ = 160,1 cm³/U, und dem Ist-Systemdruck pᵢₛₜ, dividiert durch den Pumpenwirkungsgrad ηₚᵤₘₚ multipliziert mit 20π: ${M}_{last} = \frac{{V}_{th} ⋅ {p}_{ist}}{20 π ⋅ {η}_{pump}}$. Der Pumpenwirkungsgrad ηₚᵤₘₚ wiederum kann aus der Pumpenkennlinie im Arbeitspunkt, d.h. bei einer bestimmten Motordrehzahl n, ermittelt werden. Die Pumpenkennlinie stellt einen typischen Verlauf des elektrischen Motormoments Mₘₒₜₒᵣ des Elektromotors 2 und des mechanischen Lastmoments Mₗₐₛₜ des Elektromotors 2, bzw. der Pumpe 3 dar und wird üblicherweise vom Hersteller des Servoantriebs 9 bereitgestellt. So kann beispielsweise bei einer Drehzahl n = 35 s⁻¹ als Arbeitspunkt ein Pumpenwirkungsgrad ηₚᵤₘₚ von 0,85 abgelesen werden.

Bei einem Istdruck pᵢₛₜ = 139,1 bar, einer Drehzahl n = 35 Umdrehungen/s und einem Pumpenwirkungsgrad ηₚᵤₘₚ von 0,85 (d.h. weiter einem Faktor 1-0,85=0,15 an Verlusten) ergibt, d.h. ein damit ein Drehmomentabfall Mᵥ in der Höhe von 62,54 Nm, welcher damit proportional zu den Verlusten (1- ηₚᵤₘₚ) ist. Die korrigierte Motorkennzahl kᵥ unter Berücksichtigung der viskosen Arbeit ergibt somit bei Division des Drehmomentabfalls Mᵥ durch eine Drehzahl n = 35 1/s einen Wert von kᵥ = 1,8 Nms: $\begin{matrix}{M}_{v} = {k}_{ν} ⋅ n = \frac{\left(1-{η}_{pump}\right) ⋅ {V}_{th} ⋅ {p}_{ist}}{20 π ⋅ {η}_{pump}} \\ ⇒ {k}_{ν} = \frac{\left(1-{η}_{pump}\right) ⋅ {V}_{th} ⋅ {p}_{ist}}{20 π ⋅ {η}_{pump} ⋅ n} = \frac{0 , 15 ⋅ 160 , 1 ⋅ 139 , 1}{20 π ⋅ 0 , 85 ⋅ 35} Nms = \frac{62 , 54 Nms}{35} = 1 , 8 Nms\end{matrix}$

Die korrigierte Drehmomentkonstante kᵥ kann weiter im gewählten Arbeitspunkt für die erfindungsgemäße Ermittlung des berechneten mechanischen Lastmoments M_{last,ber} verwendet werden: ${M}_{last , ber} = {M}_{motor} - \frac{{k}_{ν}}{2 π} {ω}_{motor} - {J}_{motor} ⋅ {\dot{ω}}_{motor}$

Das Motormoment Mₘₒₜₒᵣ wird üblicherweise aus dem Produkt einer Motorkonstanten kt und einem momentbildenden Strom I berechnet. Die Motorkonstante kt kann auf bekannte Weise optimiert werden. In Fig.4 werden übliche Verläufe von berechneter Motorkonstante kₜ,_{ber}, optimierter Motorkonstante k_{t,mod} und tatsächlicher, gemessener Motorkonstante k_{t,mess} gegenübergestellt, wobei die jeweiligen Werte auf Ampere normiert wurden.

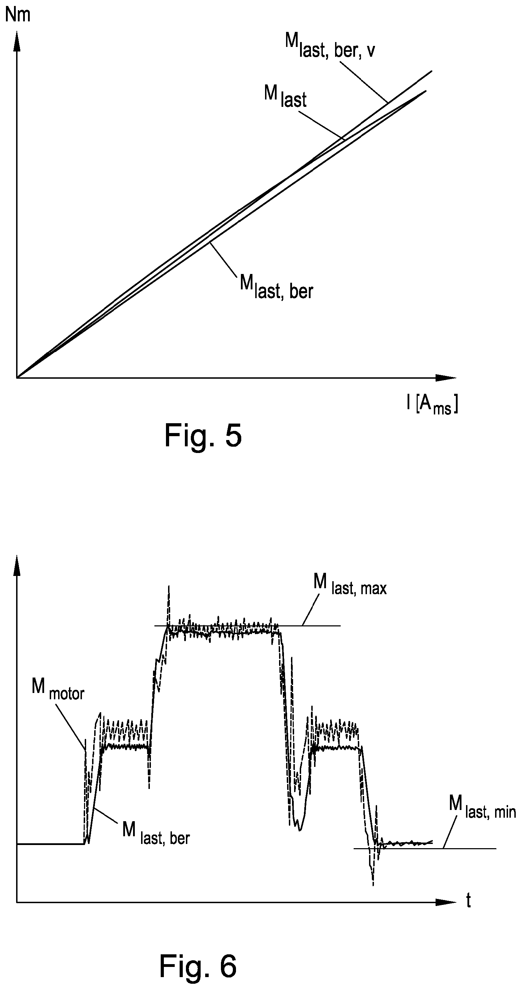

In Fig. 5 ist das unter Verwendung einer korrigierten Drehmomentkonstanten kᵥ berechnete mechanische Lastmoment M_{last,ber,v} und das tatsächliche Lastmoment Mₗₐₛₜ für eine Betriebszyklus einer Servopumpe gegenübergestellt. Das tatsächliche Lastmoment Mₗₐₛₜ wurde dabei aus dem gemessenen Ist-Systemdruck pᵢₛₜ zurückgerechnet. Es ist ersichtlich, dass das mittels der korrigierten Drehmomentkonstanten kᵥ berechnete mechanische Lastmoment M_{last,ber,v} eine bessere Näherung für das tatsächliche Lastmoment Mₗₐₛₜ bietet, als das berechnete mechanische Lastmoment M_{last,ber}, welches mittels der vorgegebenen Drehmomentkonstanten k₀ berechnet wurde.

Fig.6 zeigt einen typischen Verlauf eines abgeschätzten Lastmoments M_{last,ber}. Auch ist in Fig. 6 ersichtlich, dass das Motormoment Mₘₒₜₒᵣ Spitzen erfahren kann, die über ein erlaubtes Lastmoment Mₗₐₛₜ (in Fig. 6 der Übersichtlichkeit halber nicht eingezeichnet) hinausreichen würden, jedoch keine unzulässigen Werte des berechneten Lastmoments M_{last,ber} und damit auch des tatsächlichen Lastmoment Mₗₐₛₜ bewirken. Dies ist möglich, da wie erwähnt das Lastmoment Mₗₐₛₜ z.B. aufgrund der Massenträgheit verzögert auf das Motormoment Mₘₒₜₒᵣ reagiert. Das Motormoment Mₘₒₜₒᵣ wird erst begrenzt wenn z.B. ein unzulässig abgeschätztes Lastmoment M_{last,ber} erreicht wird, was vorteilhaft gegenüber fixen Grenzen für das Motormoment Mₘₒₜₒᵣ auf der Regelungseinheit 4 ist. Als unzulässiges abgeschätztes Lastmoment M_{last,ber} kann beispielsweise eine Annäherung oder Überschreitung des abgeschätzten Lastmoments M_{last,ber} an die minimale und/oder maximalen Lastmomentschwelle M_{last,max}, M_{last,min} gesehen werden. So wird beispielsweise wie in Fig. 2 dargestellt durch die Berechnungseinheit 42 unter Verwendung einer Systemgröße x (z.B. der Motordrehzahl ωₘₒₜₒᵣ) das abgeschätzte Lastmoment M_{last,ber} berechnet und von der Vergleichseinheit 43 mit der minimalen bzw. maximalen Lastmomentschwelle M_{last,max}, M_{last,min} verglichen. Die Vergleichseinheit 43 gibt bei drohender Überschreitung ein Signal s an die Begrenzungseinheit 41 aus, welche erst dann das Motormoment Mₘₒₜₒᵣ begrenzt. Sobald das abgeschätzte Lastmoment M_{last,ber} aufgrund des aktuellen Werts der Systemgröße im Laufe der Berechnung durch die Berechnungseinheit 42 wieder Werte annimmt, bei denen keine Überschreitung/Unterschreitung der minimalen bzw. maximalen Lastmomentschwellen M_{last,max}, M_{last,min} droht (Vergleich durch die Vergleichseinheit 43), so wird das Motormoment Mₘₒₜₒᵣ nicht mehr von der Begrenzungseinheit 41 begrenzt. Vorteilhafterweise wird dies der Begrenzungseinheit 41 von der Vergleichseinheit 43 durch Ausbleiben des Signals s, ein weiteres Signal oder auf eine andere Weise signalisiert.

Hierbei ist es insbesondere auch möglich, zum Lastabwurf, also zum schnellen Stoppen des Servoantriebs 9, ein negatives Motormoment Mₘₒₜₒᵣ anzulegen, solange die Drehrichtung M_{last,ber} nicht das Vorzeichen wechselt. Bevor das Lastmoment Mₗₐₛₜ negativ wird, wird das negative Motormoment Mₘₒₜₒᵣ weggeschaltet.

Die erfindungsgemäße Überwachung des Lastmoment Mₗₐₛₜ erlaubt somit einen dynamischeren Betrieb des Servoantriebs 9.

## Patentansprüche

1. Verfahren zum Regeln des Ist-Systemdrucks (pᵢₛₜ) eines hydraulischen Verbrauchers (5) eines Hydrauliksystems (1), wobei
- einer Regelungseinheit (4) ein Soll-Systemdruck (pₛₒₗₗ) als Führungsgröße und der Ist-Systemdruck (pᵢₛₜ) als Regelgröße zugeführt werden,
- die Regelungseinheit (4) einem Elektromotor (2) eines Servoantriebs (9) ein elektrisches Motormoment (Mₘₒₜₒᵣ), welches auf eine Pumpe (3) des Servoantriebs wirkt, vorgibt,
- die Pumpe (3) einen Volumenstrom am hydraulischen Verbraucher (5) erzeugt, wodurch sich ein mechanisches Lastmoment (Mₗₐₛₜ) am Elektromotor (2) einstellt
- und im hydraulischen Verbraucher (5) über den Volumenstrom (11) der Ist-Systemdruck (pᵢₛₜ) erzeugt wird,
wobei einer Begrenzungseinheit (41) eine dynamische Systemgröße (x) des Hydrauliksystems (1) übermittelt wird, und die Begrenzungseinheit (41) das von der Regelungseinheit (4) an den Elektromotor (2) übermittelte Motormoment (Mₘₒₜₒᵣ) in Abhängigkeit vom Wert der dynamischen Systemgröße (x) begrenzt, **dadurch gekennzeichnet, dass** eine Berechnungseinheit (42) unter Verwendung der dynamischen Systemgröße (x) ein abgeschätztes Lastmoment (M_{last_ber}) berechnet und der Begrenzungseinheit (41) übermittelt, welche das Motormoment (Mₘₒₜₒᵣ) in Abhängigkeit vom Wert des abgeschätzten Lastmoments (M_{last_ber}) begrenzt, **und dass** das abgeschätzte Lastmoment (M_{last_ber}) unter Verwendung eines Modells des Hydrauliksystems (1) berechnet wird, wobei die Motordrehzahl (ωₘₒₜₒᵣ) als dynamische Systemgröße (x) dient

2. Verfahren nach Anspruch 1, **dadurch gekennzeichnet, dass** einer Vergleichseinheit (43) eine minimale Lastmomentschwelle (M_{last_min}), vorzugsweise Null, und/oder eine maximale Lastmomentschwelle (M_{last_max}) vorgegeben wird und der Vergleichseinheit (43) von der Berechnungseinheit (42) das abgeschätzte Lastmoment (M_{last,ber}) übermittelt wird, **dass** die Vergleichseinheit (43) prüft, ob das abgeschätzte Lastmoment (M_{last_ber}) die minimale Lastmomentschwelle (M_{last_min}) unterschreitet und/oder die maximale Lastmomentschwelle (M_{last_max}) überschreitet und bei einer drohenden Unterschreitung/Überschreitung ein Signal (s) an die Begrenzungseinheit (41) übermittelt **und dass** die Begrenzungseinheit (41) bei Empfang des Signals (s) das Motormoment (Mₘₒₜₒᵣ) begrenzt.

3. Verfahren nach Anspruch 1 oder 2, **dadurch gekennzeichnet, dass** das Modell des Hydrauliksystems durch die Formel ${M}_{last} = {M}_{motor} - \frac{{k}_{0}}{2 π} {ω}_{motor} - {J}_{ges} ⋅ {\dot{ω}}_{motor}$ mit den Parametern elektrisches Motormoment (Mₘₒₜₒᵣ), Motordrehzahl (w ₘₒₜₒᵣ), Motorträgheitsmoment (Jₘₒₜₒᵣ) und einer vom Hersteller angegebenen Drehmomentkonstante (k₀) beschrieben wird.

4. Verfahren nach Anspruch 3, **dadurch gekennzeichnet, dass** aus dem Übertragungsverhalten der Antriebsstrecke eine korrigierte Drehmomentkonstante (kᵥ) ermittelt und im Modell verwendet wird, wobei das Übertragungsverhalten der Antriebsstrecke einen Zusammenhang des elektrischen Motormoments (Mₘₒₜₒᵣ) auf die Motordrehzahl (ωₘₒₜₒᵣ) beschreibt.

5. Verfahren nach Anspruch 4, **dadurch gekennzeichnet, dass** die korrigierte Drehmomentkonstante in einem Arbeitspunkt aus der Beziehung ${k}_{ν} = \frac{\left(1-{η}_{pump}\right) ⋅ {V}_{th} ⋅ {p}_{ist}}{20 π ⋅ {η}_{pump} ⋅ n}$ berechnet wird, mit den Parametern Fördervolumen der Pumpe (6) (Vₜₕ), Ist-Systemdruck (pᵢₛₜ), dem Pumpenwirkungsgrad (ηₚᵤₘₚ) und Motordrehzahl (ωₘₒₜₒᵣ), wobei die Motordrehzahl (ωₘₒₜₒᵣ) einem Produkt von 2π und einer Drehzahl (n) in 1/Minuten entspricht.

6. Verfahren nach einem der Ansprüche 1 bis 5, **dadurch gekennzeichnet, dass** die Begrenzungseinheit (41) die dynamische Systemgröße (x) von der Regelungseinheit (4) und/oder vom Servoantrieb bezieht.

7. Hydrauliksystem (1) umfassend eine aus einem Elektromotor (2) und einer Pumpe (3) zusammengesetzter Servoantrieb (9), eine Regelungseinheit (4) und einen hydraulischen Verbraucher (5), wobei der Regelungseinheit (4) ein Soll-Systemdruck (pₛₒₗₗ) als Führungsgröße vorgegeben und ein Ist-Systemdruck (pᵢₛₜ) des hydraulischen Verbraucher (5) als Regelgröße zugeführt wird und die Regelungseinheit (4) dem Elektromotor (2) ein elektrisches Drehmoment (Mₘₒₜₒᵣ) als Führungsgröße vorgibt, der Elektromotor (2) das Motormoment (Mₘₒₜₒᵣ) an die Pumpe (3) überträgt, womit die Pumpe (3) am hydraulischen Verbraucher (5) einen Volumenstrom erzeugt über welchen der Ist-Systemdruck (pᵢₛₜ) erzeugt wird und wobei sich am Elektromotor (2) ein mechanisches Lastmoment (Mₗₐₛₜ) einstellt, wobei eine Begrenzungseinheit (41) mit der Regelungseinheit (4) verbunden ist, wobei die Begrenzungseinheit (41) unter Verwendung einer dynamischen Systemgröße (x) des Hydrauliksystems (1) das von der Regelungseinheit (4) an den Elektromotor (2) übermittelte Motormoment (Mₘₒₜₒᵣ) begrenzt, **dadurch gekennzeichnet, dass** eine Berechnungseinheit (42) vorhanden ist, die unter Verwendung der dynamischen Systemgröße (x) ein abgeschätztes Lastmoment (M_{last_ber}) berechnet und an die Begrenzungseinheit (41) übermittelt, welche das Motormoment (Mₘₒₜₒᵣ) in Abhängigkeit vom abgeschätzten Lastmoment (M_{last_ber}) begrenzt, wobei das abgeschätzte Lastmoment (M_{last_ber}) unter Verwendung eines Modells des Hydrauliksystems (1) berechnet wird, wobei die Motordrehzahl (ωₘₒₜₒᵣ) als dynamische Systemgröße (x) dient.

8. Hydrauliksystem (1) nach Anspruch 7, **dadurch gekennzeichnet, dass** die Begrenzungseinheit (41) integraler Bestandteil der Regelungseinheit (4) ist.

9. Hydrauliksystem (1) nach Anspruch 7 oder 8, **dadurch gekennzeichnet, dass** die Berechnungseinheit (42) integraler Bestandteil der Begrenzungseinheit (41) ist.

10. Hydrauliksystem (1) nach einem der Ansprüche 7 bis 9, **dadurch gekennzeichnet, dass** eine Vergleichseinheit (43), die mit der Berechnungseinheit (42) und der Begrenzungseinheit (41) verbunden ist vorhanden ist, wobei die Vergleichseinheit (43) das abgeschätzte Lastmoment (M_{last,ber}) von der Berechnungseinheit (42) übermittelt bekommt und prüft, ob das abgeschätzte Lastmoment (M_{last_ber}) eine minimale Lastmomentschwelle (M_{last_min}) unterschreitet und/oder eine maximale Lastmomentschwelle (M_{last_max}) überschreitet und bei einer drohenden Unterschreitung/Überschreitung ein Signal (s) an die Begrenzungseinheit (41) übermittelt, welche bei Empfang des Signals (s) das Motormoment (Mₘₒₜₒᵣ) begrenzt.

11. Hydrauliksystem (1) nach Anspruch 10, **dadurch gekennzeichnet, dass** die Vergleichseinheit (43) integraler Bestandteil der Begrenzungseinheit (41) ist.

## Claims

1. Method for controlling the actual system pressure (pᵢₛₜ) of a hydraulic load (5) of a hydraulic system (1), wherein
- a control unit (4) is provided with a set point system pressure (pₛₒₗₗ) as a reference variable and the actual system pressure (pᵢₛₜ) as a control variable,
- the control unit (4) provides an electric motor torque (Mₘₒₜₒᵣ) to an electric motor (2) of a servo drive (9), which acts on a pump (3) of the servo drive,
- the pump (3) generates a volume flow at the hydraulic load (5), thereby establishing a mechanical load torque (Mₗₐₛₜ) sets in at the electric motor (2)
- and the actual system pressure (pᵢₛₜ) is generated in the hydraulic load (5) via the volume flow (11),
wherein a dynamic system variable (x) of the hydraulic system (1) is transmitted to a limiting unit (41), and the limiting unit (41) limits the motor torque (Mₘₒₜₒᵣ) transmitted by the control unit (4) to the electric motor (2) as a function of the value of the dynamic system variable (x), **characterized in that** a calculation unit (42) calculates an estimated load torque (M_{last_ber}) using the dynamic system variable (x) and transmits it to the limiting unit (41), which limits the motor torque (Mₘₒₜₒᵣ) as a function of the value of the estimated load torque (M_{last_ber}) **and that** the estimated load torque (M_{last_ber}) is calculated using a model of the hydraulic system (1), wherein the motor speed (ωₘₒₜₒᵣ) serves as dynamic system variable (x).

2. Method according to claim 1, **characterized in that** a minimum load torque threshold (M_{last_min}), preferably zero, and/or a maximum load torque threshold (M_{last,max}) is supplied to a comparison unit (43) and the estimated load torque (M_{last,ber}) is transmitted to the comparison unit (43) by the calculation unit (42), **that** the comparison unit (43) verifies whether the estimated load torque (M_{last_ber}) falls below the minimum load torque threshold (M_{last,min}) and/or exceeds the maximum load torque threshold (M_{last,max}), and in the event of a pending undershoot/overshoot, a signal (s) is transmitted to the limiting unit (41), **and that** the limiting unit (41) limits the motor torque (Mₘₒₜₒᵣ) upon receiving the signal.

3. Method according to claim 1 or 2, **characterized in that** the model of the hydraulic system (1) is described by the formula ${M}_{last} = {M}_{motor} - \frac{{k}_{0}}{2 π} {ω}_{motor} - {J}_{ges} ⋅ {\dot{ω}}_{motor}$ having the parameters of electric motor torque (Mₘₒₜₒᵣ), motor speed (ωₘₒₜₒᵣ), moment of inertia of the motor (Jₘₒₜₒᵣ) and torque constant (k₀) specified by the manufacturer.

4. Method according to claim 3, **characterized in that** a corrected torque constant (kᵥ) is determined from the transmission characteristics of the drive line and used in the model, wherein the transmission characteristics of the drive line describe a relationship between the electric motor torque (Mₘₒₜₒᵣ) and the motor speed (ωₘₒₜₒᵣ).

5. Method according to claim 4, **characterized in that** the corrected torque constant is calculated at an operating point from the relationship ${k}_{ν} = \frac{\left(1-{η}_{pump}\right) ⋅ {V}_{th} ⋅ {p}_{ist}}{20 π ⋅ {η}_{pump} ⋅ n}$, using the parameters of pump volume (Vₜₕ) of the pump (6), actual system pressure (pᵢₛₜ), pump efficiency (ηₚᵤₘₚ) and motor speed (ωₘₒₜₒᵣ), wherein the motor speed (ωₘₒₜₒᵣ) corresponds to a product of 2π and a speed (n) in 1/minute.

6. Method according to one of the claims 1 to 5, **characterized in that** the limiting unit (41) obtains the dynamic system variable (x) from the control unit (4) and/or the servo drive.

7. Hydraulic system (1) comprising a servo drive (9) composed of an electric motor (2) and a pump (3), a control unit (4) and a hydraulic load (5), wherein the control unit (4) is given a target system pressure (pₛₒₗₗ) as a reference variable and an actual system pressure (pᵢₛₜ) of the hydraulic load (5) as the control variable, and the control unit (4) specifies to the electric motor (2) an electric torque (Mₘₒₜₒᵣ) as a variable, the electric motor (2) transmits the motor torque (Mₘₒₜₒᵣ) to the pump (3), whereby the pump (3) generates a volume flow at the hydraulic load (5), by means of which the actual system pressure (pᵢₛₜ) is generated, and wherein a mechanical load torque (Mₗₐₛₜ) sets in at the electric motor (2), wherein a limiting unit (41) is connected to the control unit (4), wherein the limiting unit (41) limits the motor torque (Mₘₒₜₒᵣ) transmitted by the control unit (4) to the electric motor (2) by using a dynamic system variable (x) of the hydraulic system (1), **characterized in that** a calculation unit (42) is provided, which, using the dynamic system variable (x), calculates an estimated load torque (M_{last_ber}) and transmits it to the limiting unit (41), which limits the motor torque (Mₘₒₜₒᵣ) as a function of the estimated load torque (M_{last_ber}), wherein the estimated load torque (M_{last_ber}) is calculated using a model of the hydraulic system (1) with the motor speed (ωₘₒₜₒᵣ) serving as dynamic system variable (x).

8. Hydraulic system (1) according to claim 7, **characterized in that** the limiting unit (41) is an integral component of control unit (4).

9. Hydraulic system (1) according to claim 7 or 8, **characterized in that** the calculation unit (42) is an integral component of limiting unit (41).

10. Hydraulic system (1) according to one of the claims 7 to 9, **characterized in that** a comparison unit (43), which is connected to the calculation unit (42) and the limiting unit (41), is present, wherein the comparison unit (43) receives the estimated load torque (M_{last,ber}) from the calculation unit (42) and verifies whether the estimated load torque (M_{last_ber}) falls below a minimum load torque threshold (M_{last_min}) and/or exceeds a maximum load torque threshold (M_{last_max}), and in the event an imminent undershoot/overshoot transmits a signal (s) to the limiting unit (41), which limits the motor torque (Mₘₒₜₒᵣ) upon receiving the signal (s).

11. Hydraulic system (1) according to claim 10, **characterized in that** the comparison unit (43) is an integral component of the limiting unit (41).

## Revendications

1. Procédé de régulation de la pression système réelle (pᵢₛₜ) d'un consommateur hydraulique (5) d'un système hydraulique (1),
- une pression système de consigne (pₛₒₗₗ) en tant que grandeur de référence et la pression système réelle (pᵢₛₜ) en tant que grandeur de régulation étant acheminées à une unité de régulation (4),
- l'unité de régulation (4) spécifiant à un moteur électrique (2) d'une servocommande (9) un couple moteur électrique (Mₘₒₜₒᵣ), lequel agit sur une pompe (3) de la servocommande,
- la pompe (3) générant un débit volumique au niveau du consommateur hydraulique (5), moyennant quoi un couple de charge mécanique (Mₗₐₛₜ) s'établit au niveau du moteur électrique (2)
- et la pression système réelle (pᵢₛₜ) étant générée dans le consommateur hydraulique (5) par le biais du débit volumique (11),
une grandeur système dynamique (x) du système hydraulique (1) étant communiquée à une unité de limitation (4), et l'unité de limitation (41) limitant le couple moteur (Mₘₒₜₒᵣ) communiqué par l'unité de régulation (41) au moteur électrique (2) en fonction de la valeur de la grandeur système dynamique (x), **caractérisé en ce que** qu'une unité de calcul (42) calcule un couple de charge estimé (M_{last_ber}) en utilisant la grandeur système dynamique (x) et le communique à l'unité de limitation (41), laquelle limite le couple moteur (Mₘₒₜₒᵣ) en fonction de la valeur du couple de charge estimé (M_{last_ber}), et **en ce que** le couple de charge estimé (M_{last_ber}) est calculé en utilisant un modèle du système hydraulique (1), la vitesse de rotation du moteur (ωₘₒₜₒᵣ) servant de grandeur système dynamique (x).

2. Procédé selon la revendication 1, **caractérisé en ce qu'**un seuil de couple de charge minimal (M_{last_min}), de préférence nul, et/ou un seuil de couple de charge maximal (M_{last_max}) sont spécifiés à une unité de comparaison (43) et le couple de charge estimé (M_{last,ber}) est communiqué à l'unité de comparaison (43) par l'unité de calcul (42), **en ce que** l'unité de comparaison (43) vérifie si le couple de charge estimé (M_{last_ber}) franchit vers le bas le seuil de couple de charge minimal (M_{last_min}) et/ou franchit vers le haut le seuil de couple de charge maximal (M_{last_max}) et, en cas de risque de franchissement vers le bas/vers le haut, communique un signal (s) à l'unité de limitation (41), et **en ce que** l'unité de limitation (41), lors de la réception du signal (s), limite le couple moteur (Mₘₒₜₒᵣ).

3. Procédé selon la revendication 1 ou 2, **caractérisé en ce que** Le modèle de système hydraulique est décrit par la formule ${M}_{last} = {M}_{motor} - \frac{{k}_{0}}{2 π} {ω}_{motor} - {J}_{ges} ⋅ {\dot{ω}}_{motor}$ avec les paramètres couple moteur électrique (Mₘₒₜₒᵣ), vitesse de rotation du moteur (wₘₒₜₒᵣ), moment d'inertie du moteur (Jₘₒₜₒᵣ) et une constante de couple (k₀) indiquée par le constructeur.

4. Procédé selon la revendication 3, **caractérisé en ce qu'**une constante de couple corrigée (kᵥ) est déterminée à partir du comportement de transmission de la chaîne cinématique et utilisée dans le modèle, le comportement de transmission de la chaîne cinématique décrivant une relation entre le couple moteur électrique (Mₘₒₜₒᵣ) et la vitesse de rotation du moteur (ωₘₒₜₒᵣ).

5. Procédé selon la revendication 4, **caractérisé en ce que** la constante de couple corrigée à un point de fonctionnement est calculée à partir de la relation ${k}_{v} = \frac{\left(1-{η}_{pump}\right) ⋅ {V}_{th} ⋅ {p}_{ist}}{20 π ⋅ {η}_{pump} ⋅ n}$ , avec les paramètres volume de refoulement de la pompe (6) (Vₜₕ), pression système réelle (pᵢₛₜ), le rendement de la pompe (ηₚᵤₘₚ) et vitesse de rotation du moteur (ωₘₒₜₒᵣ), la vitesse de rotation du moteur (ωₘₒₜₒᵣ) correspondant à un produit de 2π et une vitesse de rotation (n) en tr/minute.

6. Procédé selon l'une des revendications 1 à 5, **caractérisé en ce que** l'unité de limitation (41) obtient la grandeur système dynamique (x) auprès de l'unité de régulation (4) et/ou de la servocommande.

7. Système hydraulique (1) comprenant une servocommande (9) composée d'un moteur électrique (2) et d'une pompe (3), une unité de régulation (4) et un consommateur hydraulique (5), une pression système de consigne (pₛₒₗₗ) étant spécifiée en tant que grandeur de référence et une pression système réelle (pᵢₛₜ) du consommateur hydraulique (5) étant acheminée en tant que grandeur de régulation à l'unité de régulation (4) et l'unité de régulation (4) spécifiant au moteur électrique (2) un couple électrique (Mₘₒₜₒᵣ) en tant que grandeur de référence, le moteur électrique (2) transmettant le couple moteur (Mₘₒₜₒᵣ) à la pompe (3), par lequel la pompe (3) génère un débit volumique au niveau du consommateur hydraulique (5) par l'intermédiaire duquel la pression système réelle (pᵢₛₜ) est générée et un couple de charge mécanique (Mₗₐₛₜ) s'établissant au niveau du moteur électrique (2), une unité de limitation (41) étant reliée à l'unité de régulation (4), l'unité de limitation (41) limitant le couple moteur (Mₘₒₜₒᵣ) communiqué par l'unité de régulation (4) au moteur électrique (2) en utilisant une grandeur système dynamique (x) du système hydraulique (42), **caractérisé en ce qu'**une unité de calcul (1) est présente, qui calcule un couple de charge estimé (M_{last_ber}) en utilisant la grandeur système dynamique (x) et le communique à l'unité de limitation (41), laquelle limite le couple moteur (Mₘₒₜₒᵣ) en fonction du couple de charge estimé (M_{last_ber}), le couple de charge estimé (M_{last_ber}) étant calculé en utilisant un modèle du système hydraulique (1), la vitesse de rotation du moteur (ωₘₒₜₒᵣ) servant de grandeur système dynamique (x).

8. Système hydraulique (1) selon la revendication 7, **caractérisé en ce que** l'unité de limitation (41) fait partie intégrante de l'unité de régulation (4).

9. Système hydraulique (1) selon la revendication 7 ou 8, **caractérisé en ce que** l'unité de calcul (42) fait partie intégrante de l'unité de limitation (41).

10. Système hydraulique (1) selon l'une des revendications 7 à 9, **caractérisé en ce qu'**une unité de comparaison (43), qui est reliée à l'unité de calcul (42) et à l'unité de limitation (41), est présente, l'unité de comparaison (43) recevant le couple de charge estimé (M_{last,ber}) communiqué par l'unité de calcul (42) et vérifiant si le couple de charge estimé (M_{last_ber}) franchit vers le bas d'un seuil de couple de charge minimal (M_{last_min}) et/ou franchit vers le haut un seuil de couple de charge maximal (M_{last_max}) et, en cas de risque de franchissement vers le bas/vers le haut, communique un signal (s) à l'unité de limitation (41), laquelle limite le couple moteur (Mₘₒₜₒᵣ) lors de la réception du signal (s).

11. Système hydraulique (1) selon la revendication 10, **caractérisé en ce que** l'unité de comparaison (43) fait partie intégrante de l'unité de limitation (41).
